# EUROPEAN PATENT SPECIFICATION

(11) **EP 0 670 191 B1**
(45) Date of publication and mention of the grant of the patent: **14.04.1999**
(21) Application number: 95850042.3
(22) Date of filing: 22.02.1995
(51) Int. Cl.: B23B 27/16

(54) **Toolholder**
Werkzeughalter
Porte-outil

(30) Priority: 04.03.1994 SE 9400742
(43) Date of publication of application: 06.09.1995
(73) Proprietor: SANDVIK AKTIEBOLAG, 811 81 Sandviken (SE)
(72) Inventor: Nyman, Folke, S-811 39 Sandviken (SE)
(74) Representative: Taquist, Lennart

(56) References cited:
- EP-A- 0 398 363
- GB-A- 1 482 742
- US-A- 3 980 443

## Description

The present invention relates to a toolholder according to the preamble of claim 1 and as known from e.g. US-A-3 980 443. In particular it relates to a toolholder in which a cutting insert with a central hole is mechanically clamped against a pin that enters into the hole of the insert. The clamping means comprises a wedge clamp which is acting on an edge surface as well as on the top surface of the insert, thus urging the insert against the pin and downwards against a bottom supporting surface. The present clamping means will enable clamping both single and double-sided insert of basic negative shape having chipbreakers at both its top and bottom surfaces.

In pin-type holders the insert is located in clamped position against a pin in the insert-receiving site of the holder. The insert is brought into clamped position between the pin and an abutment surface of the holder facing the pin. In US Patent 3,905,081 is disclosed such a cutting tool in which the clamping device comprises two distantly provided extensions formed as convex ridges, one of which is brought into abutment with the top face and one of which is brought into contact with an edge face of the cutting insert.

US-A-3,980,443 discloses a toolholder with an insert-locating site at its end from bottom of which extends a pin upon which the insert is to be located. A screw actuated wedge is provided for wedging engagement between a side support surface of the holder and an edge face of the insert. The wedge has a single upper protrusion to bear against the top face of the insert and a single protrusion to bear against the rearwardly facing wall of said insert. With such a pin-type holder there is a risk that the forward underneath portion of the insert could come apart from its underneath support when exposed to severe cutting conditions.

It has been found that clamping devices of the type described above do not in all respects satisfy the demands of tools used in industry today. One essential requirement is that the size and direction of the clamping force shall be able to secure the insert in its location against a minimum of displacement whilst subjected to a maximum of cutting force acting on the cutting edge. It is another requirement to secure the insert so that vibrations or intermittent cutting sequences do not provide reduced clamping force or too early fatigue failures of components and insert locations of such toolholders. It is furthermore desirable to provide a holder such that its components do not provide reduced chip flow or reduced cool medium supply to the cutting insert and its engagement with the workpiece to be cut. These requirements are of utmost importance in turning and copying toolholders where the active cutting edges converge under an acute angle forwardly towards a cutting tip.

All these demands can be satisfactorily fulfilled by a toolholder as defind by the present invention. The invention relates to a cutting toolholder which comprises a clamping wedge with distantly provided extensions intended to abut against the top face of the insert and also against one edge face of the insert. These contact surfaces of the clamping wedge should be in the form of flat contact surfaces in order to reduce high point pressure on the cutting insert which normally is made of cemented carbide. This will enable the points of force actuation of the clamping wedge to be located as far away as possible from the actuation point of the tangential cutting force that is acting on the insert. This is very important in intermittent force actuation on the cutting edge of the insert.

The invention will now be described more in detail in the following specification taken with the appending drawings, in which:
Fig. 1 is a plan view of a cutting toolholder according to the invention.
Fig. 2 is a side view of the tool in Fig. 1.
Fig. 3 is an enlarged sectional view along the line III-III in Fig. 1.
Fig. 4 is a plan view of the clamping wedge, and
Fig. 5 is a view from the underneath side of the clamping wedge.

In the drawings 10 designates a toolholder of a cutting tool having a forward end portion with an insert-receiving site in which a bore 11 terminates. A cutting insert 12 is located in said site whilst being supported against a shim plate 13 in said site. The cutting insert 12 has a central hole 14 that extends entirely through the centre of said insert. The cutting insert is of polygonal shape having at each corner two converging cutting edges meeting at acute angles.

A locking pin 15 is received in said bore 11 the head portion 16 of said pin engaging with a lower portion of the wall of the hole 14. The clamping device that is acting on the insert 12 is a clamping wedge 17 in which a clamping screw 18 is received. When the clamping screw 18 is tensioned the clamping device acts as a wedge and is brought into clamped position between a support surface 19 of the holder and an adjacent edge surface 20 of the insert whereby said support surface 19 is at least partially converging downwards in a fashion that corresponds with the wedge 17. The rear face 21 of the wedge 17 is substantially convexly curved whereas its front portion has a forward extension 22 provided by a pair of protrusions 24 and 25 separated by a circularly provided recess 23 therebetween, said recess 23 being partially surrounding the correspondingly curved central hole 14 of the insert, the radius of said recess 23 being substantially equal to or somewhat greater than the radius of said hole 14. The underneath side of said protrusions 24 and 25 being flat surfaces 24a and 25a intended for surface abutment against the top face of the insert 12. The wedge is also provided with a pair of distantly provided second protrusions 26a and 26b at a level below said first protrusions 24, 25 which are flat whilst oriented such that they include an obtuse angle corresponding with an adjacent edge surface 20 of the insert which comprises two angularly provided contact surfaces. The clamp screw 18 is centrally provided in a U-shaped recess 27 in the wedge 17 whereby the head 28 of said screw has a flat underneath surface perpendicularly oriented in relation to the direction of the central axis CL of said clamp screw 18. The clamp screw 18 is provided with a lower threaded portion 29 which is threadably engaged in a corresponding threaded bore 30 in the holder 10. The underneath side of said screw head 28 is arranged, possibly via an intermediate plate 31, to abut against a radial abutment surface 32 of the clamp wedge. The diametrically opposite portion of said clamp underneath surface is not intended to come into corresponding abutment with any similar radial surface. This is provided due to the fact that the portion of said recess 27 located directly opposite said radial abutment surface 32, is a radial surface 33 that is located on a lower plane than compared with said radial abutment surface 32.

The surfaces 32 and 33, located at different levels as aforesaid, are arranged around the hole 27 of the wedge 17. There is also a further recess 34 around said hole 27 which is eccentrically provided in relation to the central exis CL of the screw 18. The threaded bore 30 extends upwards to another bore 35 with somewhat larger diameter than said threaded bore 30 for the receipt of a spiral shaped spring 36 which is arranged to actuate a force upwards on the screw and the wedge in connection with loosening of said clamp screw 18. This is efficiently accomplished by having the central axis of said recess 34 excentrically displaced laterally towards the tip of the insert as compared with the central axis of the bore 35 in the insert side of the toolholder.

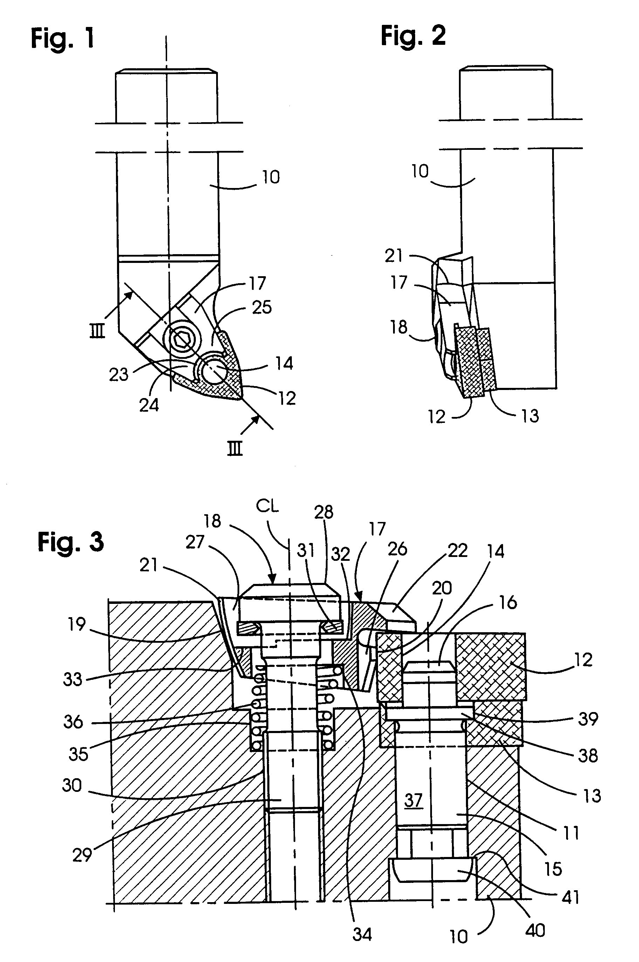

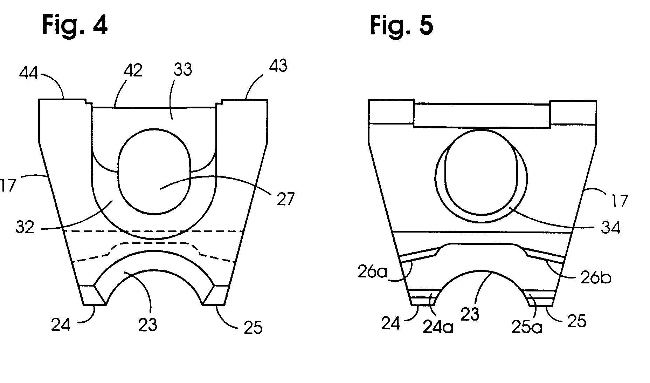

With the embodiment shown in Figs. 1-5 the recess 27 for receiving the screw 18 has been given an oval shape. The recess intersects with the radial abutment surface 32 which is C-shaped and closed forwardly but is terminated rearwardly at a medium position of said oval shaped recess 27.

The locking pin 15, upon which the insert 12 is located, is provided with a lower cylindrical portion 37 and a radial collar 38 between said cylindrical portion 37 and the head portion 16 of said screw for abutment against a corresponding annular recess 39 in the shim plate 13. The locking pin 15 is secured in the holder by means of a screw 40 that is threadably engaged with said pin from its underneath side, the radial surface of the head of said screw being urged to abutment with a corresponding radial abutment surface 41 of said holder 10. The locking pin 15 could alternatively be secured in the bore 11 by a drive fit thereby eliminating said screw 40.

The design of the wedge clamp 17 is preferably of such nature that the screw head receiving recess therein is provided as a recessed flat surface 32 which surrounds the screw receiving recess 27. The rear flat surface 33 has a straight rear edge 42. There are two distantly provided convex end surfaces 43 and 44 which extend rearwardly a certain distance beyond said rear straight edge 42. This enables a distinct location of the wedge during its abutment against the rear support surface 19 of the holder 10.

The above described form of the wedge clamp enables its clamping with a relatively small tensioning moment that without problems can be accomplished manually. Force measurements were carried out which show that the size and the direction of the clamping force enables the clamping of the insert whilst achieving a minimum of insert displacement even when subjected to a maximum of cutting forces acting on its cutting edge.

## Claims

1. Toolholder (10), comprising a holder body with an insert site at its forward end comprising a bottom surface and at least one side wall where there projects a pin (15) from said bottom surface upon which there is located an insert (12) having a central hole (14), a clamping wedge (17) for wedging engagement between a support surface (19) of the holder and an adjacent edge surface (20) of said insert (12) and an actuating screw received in said clamping wedge (17) whilst threadably engaged in a bore of said holder, said support surface (19) and said edge surface (20) are at least partially converging downwards, said clamping wedge (17) having distantly provided protrusions for abutment against the top face and the edge surface of said insert (12), wherein the clamping wedge (17) is provided with a first protrusion for abutment against a top face of the insert (12), and a second protrusion for abutment against an adjacent edge surface (20), **characterized** in that the first protrusion consists of two distantly provided first upper protrusions (24, 25) for abutment against said top face of the insert (12), in that the second protrusion consists of a pair of distantly provided protrusions (26a, 26b) and that there is a circularly shaped recess (23) provided between said first pair of protrusions (24, 25) the radius of said circular recess (23) being equal or larger than the radius of the central hole (14) of the insert (12).

2. Toolholder as defined in claim 1, **characterized** in that said first protrusions (24, 25) have flat underneath surfaces oriented in a common plane for abutment against corresponding flat surface portions on the insert (12).

3. Toolholder as defined in claim 1 or 2, **characterized** in that each of said second protrusions (26a, 26b) is provided with a flat surface portion for surface abutment against said edge surface (20) of the insert (12).

4. Toolholder as defined in any of the claims 1-3, **characterized** in that a spirally shaped spring (36) is provided around the clamp screw (18), said spring (36) being partially received in a recess (35) in the bottom portion of the insert-receiving site, and partially in a recess (34) in the clamp wedge (17) so as to provide an upward movement of said wedge upon loosening said screw (18).

5. Toolholder as defined in any of the claims 1-4, **characterized** in that the screw-receiving recess (27) in the wedge comprises a forward radial abutment surface (32) and a diametrically opposed second radial surface (33) the level of which is oriented below the level of said first abutment surface (32) such that the underneath surface of the head (28) of said screw will only come into abutment with said first abutment surface (32) upon tightening said screw (18).

6. Toolholder as defined in any of the claims 1-5, **characterized** in that the spring-receiving bore (34) in the wedge is excentrically displaced forwards towards the insert (12) in relation to the screw-receiving bore (35).

7. Toolholder as defined in any of the claims 1-6, **characterized** in that the rear surface of said clamp wedge (17) includes two distantly provided convex surfaces (43, 44) for abutment against the adjacent support surface (19) in the holder (10).

## Patentansprüche

1. Werkzeughalter (10) mit einem Haltekörper mit einem Einsatzort an seinem vorderen Ende mit einer Bodenoberfläche und mindestens einer Seitenwand, wo ein Stift (15) aus der Bodenoberfläche vorspringt, auf welcher ein Einsatz (12) angeordnet ist, der eine Mittenbohrung (14) hat, mit einem Klemmkeil (17) für den Keileingriff zwischen einer Stützoberfläche (19) des Halters und einer benachbarten Kantenoberfläche (20) des Einsatzes (12) und einer Betätigungsschraube, die in dem Klemmkeil (17) aufgenommen ist, während sie in einer Bohrung des Halters in Gewindeeingriff steht, wobei die Stützoberfläche (19) und die Kantenoberfläche (20) mindestens teilweise nach unten konvergieren, der Klemmkeil (17) im Abstand vorgesehene Vorsprünge hat für die Anlage gegen die obere Fläche und die Kantenoberfläche des Einsatzes (12), wobei der Klemmkeil (17) mit einem ersten Vorsprung versehen ist für die Anlage gegen eine obere Fläche des Einsatzes (12) und einem zweiten Vorsprung für die Anlage gegen eine benachbarte Kantenoberfläche (20), **dadurch gekennzeichnet, daß** der erste Vorsprung aus zwei im Abstand vorgesehenen ersten oberen Vorsprüngen (24, 25) besteht für die Anlage gegen die obere Fläche des Einsatzes (12), daß der zweite Vorsprung aus einem Paar von im Abstand vorgesehenen Vorsprüngen (26a, 26b) besteht und daß es eine kreisförmige Ausnehmung (23) gibt, die zwischen dem ersten Paar von Vorsprüngen (24, 25) vorgesehen ist, wobei der Radius der kreisförmigen Ausnehmung (23) gleich oder größer als der Radius der Mittenbohrung (14) des Einsatzes (12) ist.

2. Werkzeughalter nach Anspruch 1, dadurch gekennzeichnet, daß die ersten Vorsprünge (24, 25) flache untere Oberflächen haben, die in einer gemeinsamen Ebene ausgerichtet sind für die Anlagen gegen entsprechende flache Oberflächenteile auf dem Einsatz (12).

3. Werkzeughalter nach Anspruch 1 oder 2, dadurch gekennzeichnet, daß jeder der zweiten Vorsprünge (26a, 26b) mit einem flachen Oberflächenteil für die Oberflächenanlage gegen die Kantenoberfläche (20) des Einsatzes (12) versehen ist.

4. Werkzeughalter nach einem der Ansprüche 1 bis 3, dadurch gekennzeichnet, daß eine spiralförmige Feder (36) um die Klemmschraube (18) herum vorgesehen ist und teilweise in einer Ausnehmung (35) in dem Bodenteil des einsatzaufnehmenden Platzes aufgenommen ist und teilweise in einer Ausnehmung (34) in dem Klemmkeil (17), um eine Aufwärtsbewegung des Keiles beim Lösen der Schraube (18) vorzusehen.

5. Werkzeughalter nach einem der Ansprüche 1 bis 4, dadurch gekennzeichnet, daß die die Schraube aufnehmende Ausnehmung (27) in dem Keil eine vordere radiale Anlagefläche (32) und eine diametral gegenüberliegende zweite radiale Oberfläche (33) aufweist, deren Höhe unter der Höhe der ersten Anlageoberfläche (32) derart ausgerichtet ist, daß die untere Oberfläche des Kopfes (28) der Schrauben nur nach Festziehen der Schraube (18) mit der ersten Anlageoberfläche (32) in Anlage kommt.

6. Werkzeughalter nach einem der Ansprüche 1 bis 5, dadurch gekennzeichnet, daß die die Feder aufnehmende Bohrung (34) in dem Keil exzentrisch nach vorn zu dem Einsatz (12) hin bezüglich der die Schraube aufnehmenden Bohrung (35) versetzt ist.

7. Werkzeughalter nach einem der Ansprüche 1 bis 6, dadurch gekennzeichnet, daß die rückwärtige Oberfläche des Klemmkeils (17) zwei im Abstand vorgesehene, konvexe Oberflächen (43, 44) für die Anlage gegen die benachbarte Stützoberfläche (19) in dem Halter (10) aufweist.

## Revendications

1. Porte-outil (10) comprenant un corps de porte-outil comportant une zone pour l'insert à son extrémité antérieure qui présente une face inférieure et une paroi latérale au moins, une broche (15) faisant saillie à partir de ladite face inférieure, un insert (12) possédant un trou central (14) étant placé sur ladite broche (15), une cale de serrage (17) destinée à servir de cale entre une face de support (19) du porte-outil et une face limitrophe adjacente (20) dudit insert (12), et une vis d'actionnement logée dans ladite cale de serrage (17) tout en étant vissée dans un alésage dudit porte-outil, et dans lequel ladite face de support (19) et ladite face limitrophe (20) convergent au moins partiellement vers le bas, ladite cale de serrage (17) étant munie de saillies situées à une certaine distance l'une de l'autre destinées à venir en butée contre la face supérieure et la face limitrophe dudit insert (12), et dans lequel la cale de serrage (17) est équipée d'une première saillie venant en butée contre la face supérieure de l'insert (12), et d'une seconde saillie venant en butée contre une face limitrophe adjacente (20), caractérisé en ce que la première saillie consiste en deux premières saillies supérieures (24, 25) situées à une certaine distance l'une de l'autre venant buter contre ladite face supérieure de l'insert (12), en ce que la seconde saillie consiste en une paire de saillies (26a, 26b) situées à une certaine distance l'une de l'autre, et en ce que l'on a prévu un évidement circulaire (23) entre les saillies (24, 25) de la première paire, le rayon dudit évidement circulaire (23) étant égal ou supérieur au rayon du trou central (14) de l'insert (12).

2. Porte-outil selon la revendication 1, caractérisé en ce que lesdites premières saillies (24, 25) présentent des faces inférieures planes contenues dans un plan commun et servant de butées contre des parties de faces planes correspondantes de l'insert (12).

3. Porte-outil selon la revendication 1 ou la revendication 2, caractérisé en ce que chacune des secondes saillies (26a, 26b) est munie d'une partie de face plane servant de surface de butée contre ladite face limitrophe (20) de l'insert (12).

4. Porte-outil selon l'une quelconque des revendications 1 à 3, caractérisé en ce que l'on a mis un ressort spiral (36) autour de la vis de serrage (18), ledit ressort (36) étant partiellement logé dans un évidement (35) de la partie inférieure de la zone destinée à loger l'insert, et partiellement dans un évidement (34) de la cale de serrage (17), de manière à obtenir un mouvement vers le haut de ladite cale quand la vis (18) se desserre.

5. Porte-outil selon l'une quelconque des revendications 1 à 4, caractérisé en ce que l'évidement (27) de la cale logeant la vis comporte une surface de butée radiale antérieure (32) et une seconde surface radiale diamétralement opposée (33) dont le niveau est inférieur au niveau de ladite surface de butée (32), de telle sorte que la face inférieure de la tête (28) de ladite vis ne vient buter que contre ladite première surface de butée (32) lorsque l'on serre ladite vis (18).

6. Porte-outil selon l'une quelconque des revendications 1 à 5, caractérisé en ce que l'alésage (34) destiné à loger le ressort dans la cale est déplacé de façon excentrique vers l'avant en direction de l'insert (12) par rapport à l'alésage (35) logeant la vis.

7. Porte-outil selon l'une quelconque des revendications 1 à 6, caractérisé en ce que la face postérieure de ladite cale de serrage (17) comporte deux faces convexes (43, 44), situées à une certaine distance l'une de l'autre et servant de butées contre la face de support adjacente (19) du porte-outil (10).
